# EUROPEAN PATENT SPECIFICATION

(11) **EP 3 791 252 B1**
(45) Date of publication and mention of the grant of the patent: **27.11.2024**
(21) Application number: 19807757.0
(22) Date of filing: 22.05.2019
(51) Int. Cl.: H04W 4/00, H01Q 1/22, G06F 3/041, G06F 3/044

(54) **TRANSPARENT ANTENNA-INTEGRATED TOUCH SENSOR FOR A TOUCH SCREEN DEVICE**
TRANSPARENTER ANTENNENINTEGRIERTER BERÜHRUNGSSENSOR FÜR EINE BERÜHRUNGSBILDSCHIRMVORRICHTUNG
CAPTEUR TACTILE INTÉGRÉ À UNE ANTENNE TRANSPARENT POUR DISPOSITIF À ÉCRAN TACTILE

(30) Priority: 23.05.2018 US 201815987650
(43) Date of publication of application: 17.03.2021
(73) Proprietor: HUAWEI TECHNOLOGIES CO., LTD., Shenzhen, Guangdong 518129 (CN)
(72) Inventor: GU, Huanhuan, Waterloo, Ontario N2L 0A4 (CA)
(74) Representative: Pfenning, Meinig & Partner mbB
(86) International application number: PCT/CN2019/087941
(87) International publication number: WO 2019/223713

(56) References cited:
- WO-A1-2017/069114
- CN-A- 101 916 144
- CN-A- 102 569 987
- CN-A- 106 791 159
- US-A1- 2012 034 888
- US-A1- 2012 162 128
- US-A1- 2013 285 797
- US-A1- 2016 093 939
- US-A1- 2016 188 092
- US-A1- 2017 139 520

## Description

### TECHNICAL FIELD

Example embodiments generally relate to the technical field of touch sensors, touch screens, and antennas, and in particular to a wireless antenna integrated into a touch screen.

### BACKGROUND

Touch screens are used in many electronic devices, including mobile phones, tablets, computers, vehicle dashboards, Global Positioning Systems (GPS), Point-Of-Sale (POS) terminals, and Automated Teller Machines (ATMs).

Some touch screens include a display screen that is overlaid with a touch sensor that is generally transparent so that the display screen can be viewable. The touch sensor includes a layer having a number of conductive traces that can be used to detect touch input but are suitably thin so as to be transparent.

As wireless communication devices are designed to be more compact, smaller and thinner, there is a desire to fit as many components into a limited space as possible. For example, the conductive elements for the antennas have conventionally been on a separate circuit board or packaging than the touch screen.

Previous attempts have been made to integrate an antenna into the screen, for example by adding one or more layers to the screen to accommodate the antenna, or by using "dead area" outside of the portion of the screen that is sensitive to touch. However, this causes design challenges, such as increasing the thickness of the device or requiring a portion of the screen to be unable to accept touch input.

Document US 2013/285797 A1 discloses a method of saving power in a battery powered device that includes a radio frequency identification (RFID) tag reader and a touch sensor, said method comprising: providing a touch sensor that can perform proximity and touch sensing; providing a radio frequency identification (RFID) tag reader for reading data from an RFID tag; detecting an RFID tag using proximity sensing of the touch sensor; activating the RFID tag reader; reading the RFID tag; and deactivating the RFID tag reader in order to conserve power in the battery powered device.

Document US 2012/162128 A1 discloses a touch input device comprising: a transparent electrode having a plurality of unit electrodes; a switch configured to reconfigure an electrical connection state of the transparent electrode; and a controller configured to control the switch that reconfigures the electrical connection state of the transparent electrode.

Document US 2012/034888 A1 discloses a method for communication, the method comprising: in a wireless device comprising a touchscreen interface: configuring one or more antennas in said touchscreen interface by capacitively-coupling conductive layers in said touchscreen interface; and communicating RF signals utilizing said one or more configured antennas in said touchscreen interface.

Document US 2017/139520 A1 discloses a touch display apparatus with a transparent antenna.

It is desired to provide transparent touch sensors and touch screens that can use a conductive element as both a touch sensor and an antenna.

This background information is provided to reveal information believed by the applicant to be of possible relevance. No admission is necessarily intended, nor should be construed, that any of the preceding information constitutes prior art.

### SUMMARY

The invention is defined by the appended claims. Embodiments and aspects described hereafter which are not covered by the claims are presented not as embodiments of the invention but as examples useful for understanding the invention.

An example embodiment is a transparent antenna-integrated touch sensor device that can be used in touch screens and portable mobile communication devices such as tablets and mobile phones.

In an example embodiment, the touch sensor device includes a layer of conductive material having an electromagnetically conductive element. The electromagnetically conductive element is used as both a touch sensor and an antenna.

In an example embodiment, the conductive material is a conductive mesh that has a thickness so as to appear to be generally transparent.

An object of at least some example embodiments is to provide a device and method for improved antenna-integrated touch sensors.

An object of at least some example embodiments is to reduce an amount of space required to integrate antennas into touch sensors when compared to other existing devices.

An example embodiment is a touch sensor device, comprising: a layer of conductive material that includes an electromagnetically conductive element; a touch sensor controller configured to operate the electromagnetically conductive element as a touch sensor; and an antenna controller configured to operate the electromagnetically conductive element as an antenna.

In an example embodiment, the touch sensor device further comprises one or more transparent dielectric layers that cover the conductive material.

In an example embodiment of any of the above touch sensor devices, the touch sensor device further comprises, the touch sensor controller and the antenna controller are further configured to operate the electromagnetically conductive element as the touch sensor at a different time than operating the electromagnetically conductive element as the antenna.

In an example embodiment of any of the above touch sensor devices, the touch sensor device further comprises a memory that stores a whitelist of one or more applications, and wherein operation of the electromagnetically conductive element is switched from operation as the antenna to operation as the touch sensor based on detecting execution of one of the applications in the whitelist.

In an example embodiment of any of the above touch sensor devices, operation of the electromagnetically conductive element as the antenna is switched to operation of the electromagnetically conductive element as the touch sensor based on criteria stored in memory.

In an example embodiment of any of the above touch sensor devices, operation of the electromagnetically conductive element as the antenna is performed on a duty cycle, and wherein operation of the electromagnetically conductive element as the touch sensor is performed when the duty cycle is off cycle.

In an example embodiment of any of the above touch sensor devices, the conductive material is a conductive mesh, the touch sensor device further comprising a transparent substrate for supporting the conductive mesh.

In an example embodiment of any of the above touch sensor devices, the touch sensor device further comprises one or more transparent dielectric layers that cover the transparent substrate and the conductive mesh.

In an example embodiment of any of the above touch sensor devices, the conductive mesh is arranged in a plurality of rows, the touch sensor controller configured to detect a change in capacitance of at least one of the rows.

In an example embodiment of any of the above touch sensor devices, the antenna controller is configured to operate the conductive material from more than one row collectively as a single antenna.

In an example embodiment of any of the above described touch sensor devices, at least one row of the transparent mesh layer further comprises a plurality of conductive mesh areas connected in series.

In an example embodiment of any of the above described touch sensor devices, the electromagnetically conductive element is located at one end of at least one of the rows and is insulated from the plurality of conductive mesh areas connected in series.

In an example embodiment of any of the above described touch sensor devices, the touch sensor device further comprises a second layer of conductive material insulated from said layer of conductive material, the second conductive material being arranged in a plurality of columns that are orthogonal to the plurality of rows, wherein the touch sensor controller is configured to operate the second conductive material as the touch sensor.

In an example embodiment of any of the above described touch sensor devices, the touch sensor controller is configured to detect a touch position of one of the rows and one of the columns using said layer of conductive material and said second layer of conductive material.

In an example embodiment of any of the above described touch sensor devices, the touch sensor controller is configured to: detect a touch position of one of the columns, determine that no touch event has been detected on any of the rows, and infer a touch position of the row or rows that are currently being used by the antenna controller as the antenna.

In an example embodiment of any of the above described touch sensor devices, the second conductive material includes a second electromagnetically conductive element wherein the antenna controller is configured to operate the second electromagnetically conductive element as the antenna and wherein the touch sensor controller is configured to operate the second conductive material as the touch sensor.

In an example embodiment of any of the above described touch sensor devices, the touch sensor device further comprises a second layer of conductive material insulated from said layer of conductive material and including a second electromagnetically conductive element, wherein the touch sensor controller is configured to operate the second electromagnetically conductive element as the touch sensor, wherein the antenna controller is configured to operate the second electromagnetically conductive element as the antenna.

In an example embodiment of any of the above described touch sensor devices, the second electromagnetically conductive element is located at a different touch position than said electromagnetically conductive element of said layer of conductive material.

In embodiments according to the invention of any of the above described touch sensor devices, the layer of conductive material includes a plurality of electromagnetically conductive elements that are separated by an insulating material to operate as a parasitic patch antenna by the antenna controller.

In an example embodiment of any of the above described touch sensor devices, the electromagnetically conductive element is a patch antenna.

In an example embodiment of any of the above described touch sensor devices, the conductive mesh has conductive strands that are substantially transparent.

In an example embodiment of any of the above described touch sensor devices, the touch device further comprises a switch configured to selectively provide connection between the electromagnetically conductive element and touch sensor controller and the antenna controller.

Another example embodiment is a method for controlling a touch sensor device, the touch sensor device including a layer of conductive material that includes an electromagnetically conductive element, the method comprising: operating, using a touch sensor controller, the electromagnetically conductive element as a touch sensor; and operating, using a antenna controller, the electromagnetically conductive element as an antenna.

Another example embodiment is a non-transitory computer readable medium containing instructions for controlling a touch sensor device, the touch sensor device including a layer of conductive material that includes an electromagnetically conductive element, the non-transitory computer readable medium comprising instructions executable by one or more controllers of a wireless communication device, the one or more controllers including a touch sensor controller and an antenna controller, the instructions comprising: instructions for the touch sensor controller to operate the electromagnetically conductive element as a touch sensor; and instructions for the antenna controller to operate the electromagnetically conductive element as an antenna.

Another example embodiment is a touch display, comprising: a display screen; a layer of conductive material that overlays the display screen and includes a plurality of electromagnetic conductive elements; a touch sensor controller configured to operate the plurality of electromagnetic conductive elements as a touch sensor; and an antenna controller configured to operate the plurality of electromagnetic conductive elements as a parasitic patch antenna.

### BRIEF DESCRIPTION OF THE FIGURES

Embodiments will now be described by way of examples with reference to the accompanying drawings, in which like reference numerals may be used to indicate similar features, and in which:
Figure 1A illustrates in diagrammatic form an example touch sensor device having integrated antenna function, in accordance with an example embodiment;
Figure 1B illustrates in diagrammatic form another example touch sensor device having integrated antenna function, in accordance with another example embodiment;
Figure 1C illustrates in diagrammatic form another example touch sensor device having integrated antenna function, in accordance with another example embodiment;
Figure 1D illustrates in diagrammatic form another example touch sensor device having integrated antenna function, in accordance with another example embodiment;
Figure 1E illustrates in diagrammatic form an example cross-sectional profile of an example touch sensor device having integrated antenna function, in accordance with an example embodiment;
Figure 2 shows a block diagram illustrating a wireless communication device to which example embodiments can be applied;
Figure 3 illustrates an exploded perspective diagrammatic view of an example touch screen having integrated antenna function, in accordance with an example embodiment;
Figures 4A and 4B each illustrate, in diagrammatic form, an example layer of the touch screen of Figure 3, in accordance with an example embodiment.
Figures 5A and 5B each illustrate, in diagrammatic form, an example layer of the touch screen of Figure 3, in accordance with another example embodiment;
Figure 6 illustrates, in diagrammatic form, example layers of the touch screen of Figure 3, in accordance with an example embodiment;
Figure 7A illustrates an example touch sensor device having an integrated antenna, in accordance with an example embodiment;
Figure 7B illustrates simulation results of the integrated antenna of Figure 7A;
Figure 8A illustrates another example touch sensor device having an integrated antenna, in accordance with an example embodiment;
Figure 8B illustrates simulation results of the integrated antenna of Figure 8A;
Figure 9A illustrates, in diagrammatic form, example layers of the touch screen of Figure 3 in a touch sensor mode of operation, in accordance with an example embodiment;
Figure 9B illustrates the example layers of Figure 9A in an antenna mode of operation, in accordance with an example embodiment;
Figure 10A illustrates another example layer of a touch sensor device, having integrated antenna function, in accordance with an example embodiment;
Figure 10B illustrates an example antenna area of the touch sensor device of Figure 10A;
Figure 11 illustrates an example method for operating a touch screen having integrated antenna function, in accordance with an example embodiment; and
Figure 12 illustrates an example method for determining a touch position on the touch screen layers of Figure 6, in accordance with an example embodiment.

### DETAILED DESCRIPTION OF EXAMPLE EMBODIMENTS

An example embodiment is a transparent antenna-integrated touch sensor device that can be used in touch screens (also referred to as touch displays) and portable mobile communication devices such as tablets and mobile phones.

In an example embodiment, the touch sensor device includes electromagnetically conductive material in the form of a transparent conductive mesh. A dielectric is layered on top of the transparent conductive mesh for detecting changes in capacitance due to surface touch events on the dielectric. The transparent conductive mesh can also be used as an antenna.

An example embodiment is a touch sensor device, comprising: a layer of conductive material that includes an electromagnetically conductive element; a touch sensor controller configured to operate the electromagnetically conductive element as a touch sensor; and an antenna controller configured to operate the electromagnetically conductive element as an antenna.

Another example embodiment is a method for controlling a touch sensor device, the touch sensor device including a layer of conductive material that includes an electromagnetically conductive element, the method comprising: operating, using a touch sensor controller, the electromagnetically conductive element as a touch sensor; and operating, using a antenna controller, the electromagnetically conductive element as an antenna.

Another example embodiment is a non-transitory computer readable medium containing instructions for controlling a touch sensor device, the touch sensor device including a layer of conductive material that includes an electromagnetically conductive element, the non-transitory computer readable medium comprising instructions executable by one or more controllers of a wireless communication device, the one or more controllers including a touch sensor controller and an antenna controller, the instructions comprising: instructions for the touch sensor controller to operate the electromagnetically conductive element as a touch sensor; and instructions for the antenna controller to operate the electromagnetically conductive element as an antenna.

Another example embodiment is a touch display, comprising: a display screen; a layer of conductive material that overlays the display screen and includes an electromagnetically conductive element; a touch sensor controller configured to operate the electromagnetically conductive element as a touch sensor; and an antenna controller configured to operate the electromagnetically conductive element as an antenna.

Another example embodiment is a wireless communication device that includes a touch sensor or touch display in accordance with any of the above, and operates using a method in accordance with any of the above.

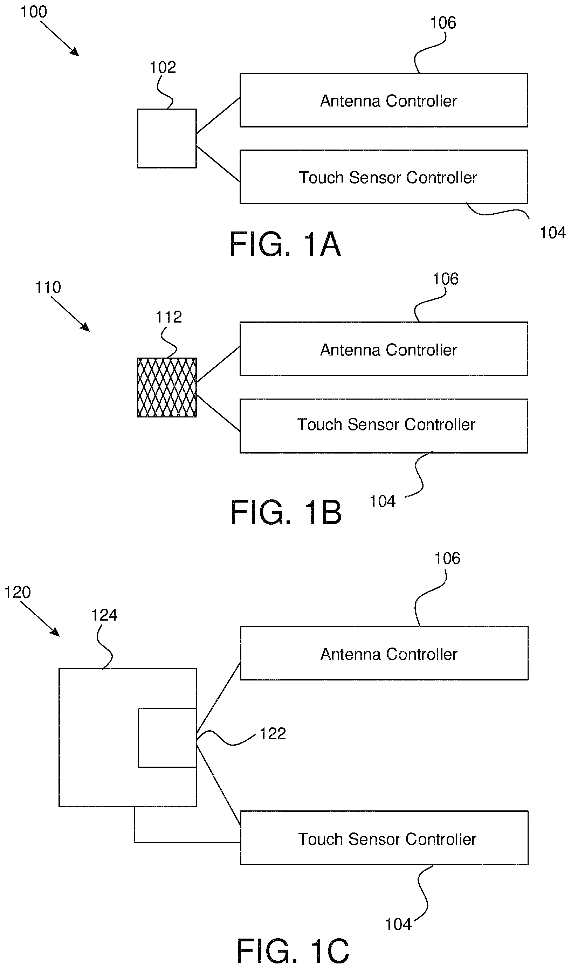

Reference is first made to Figure 1A, which illustrates a topological view of an example touch sensor device 100 having integrated antenna function, in accordance with an example embodiment. The touch sensor device 100 can be overlaid onto a display screen (not shown here). The touch sensor device 100 includes an electromagnetically conductive element 102. The electromagnetically conductive element 102 can be a conductive mesh or can be non-mesh. The touch sensor device 100 includes a touch sensor controller 104 configured to operate the electromagnetically conductive element 102 as a touch sensor, for touch sensor function. The touch sensor device 100 also includes an antenna controller 106 configured to operate the electromagnetically conductive element 102 as an antenna, for antenna function. In an example embodiment, the electromagnetically conductive element 102 is operated for the touch sensor function and the antenna function at different times, and not simultaneously. A touch sensor mode of operation refers to the electromagnetically conductive element 102 being used as the touch sensor. An antenna mode of operation refers to the electromagnetically conductive element 102 being used as the antenna.

The antenna controller 106 uses the electromagnetically conductive element 102 as an electromagnetic conductor, for at least one of transmission and reception of electromagnetic signals over-the-air for at either or both of to and from the electromagnetically conductive element 102. The antenna controller 106 can include a processor and a memory that stores instructions that are executable by the processor.

In an example embodiment, the electromagnetically conductive element 102 is shaped as a patch antenna. For example, the patch antenna generally has a small area and is flat and thin (depth not shown here).

In an example embodiment, the touch sensor controller 104 uses the electromagnetically conductive element 102 to detect touch events (touch input). For example, the touch sensor controller 104 is configured to detect a change in capacitance at the electromagnetically conductive element 102 due to the touch event from a conductor such as a human finger. The touch sensor controller 104 can include a processor and a memory that stores instructions that are executable by the processor.

As shown in Figure 1A, the touch sensor controller 104 and the antenna controller 106 each have a respective conductive lead to the electromagnetically conductive element 102. In other example embodiments (not shown here), the connection from the electromagnetically conductive element 102 to either of the touch sensor controller 104 and the antenna controller 106 can be selectively controlled, for example using a switch, a hub, a router, a relay, a controllable bus, a multiplexer (MUX), etc. One or more conductive leads may be used for the connection. In other example embodiments, the touch sensor controller 104 and the antenna controller 106 are in a same chip packaging, circuit board or processor, and selectively process, switch, or route the signals using software, hardware, or a combination of software and hardware. Any of these forms of selective connectivity to each of the touch sensor controller 104 and the antenna controller 106 can be implemented in example embodiments of touch sensor devices described herein. In other example embodiments, the touch sensor controller 104 and the antenna controller 106 are in different chip packagings, circuit boards or processors.

Figure 1B illustrates a topological view of another example touch sensor device 110, in accordance with another example embodiment. The touch sensor device 110 includes a conductive mesh 112. The touch sensor controller 104 is configured to use the conductive mesh 112 as a touch sensor, for the touch sensor function, and the antenna controller 106 is configured to use the conductive mesh 112 as an antenna, for the antenna function. The conductive mesh 112 comprises conductive material that is transparent. Reference to conductive material being "transparent" in example embodiments herein means the conductive material is of a suitable thickness that is generally transparent to the human eye or a detector (such as a 1D or 2D barcode scanner). The conductive mesh 112 is typically arranged as thin strands in a mesh pattern. Suitable example materials for the conductive material include metal material such as gold, silver, copper, palladium, platinum, aluminum, nickel, tin, alloys thereof, and combinations thereof. An example thickness of the strands of the transparent conductive material is 0.2 micrometers to 10 micrometers in some example embodiments. Factors that can affect the appropriate thickness can include the type of conductive material, the desired amount of transparency, limitations of production, cost, etc. The strands can all be the same thickness in an example embodiment, and can have different thicknesses in other example embodiments. In some other example embodiments, the conductive material can be semi-transparent rather than fully transparent.

Figure 1C illustrates a topological view of another example touch sensor device 120, in accordance with another example embodiment. Figure 1C illustrates that some electromagnetically conductive elements can be used as the touch sensor only, and not used as the antenna. The touch sensor device 120 includes a first conductive area 122 that includes conductive material and a second conductive area 124 that includes conductive material. In some example embodiments, the conductive material of the first conductive area 122 or the second conductive area 124 can be transparent conductive mesh or can be a non-mesh conductive material. The first conductive area 122 and the second conductive area 124 are on the same layer. Both the touch sensor controller 104 and the antenna controller 106 have a respective conductive lead to the first conductive area 122. In this example embodiment, only the antenna controller 106 has a conductive lead to the second conductive area 124. Both the touch sensor controller 104 and the antenna controller 106 are connected to the first conductive area 122, and in this example, only the touch sensor controller 104 and not the antenna controller 106 is connected to the second conductive area 124.

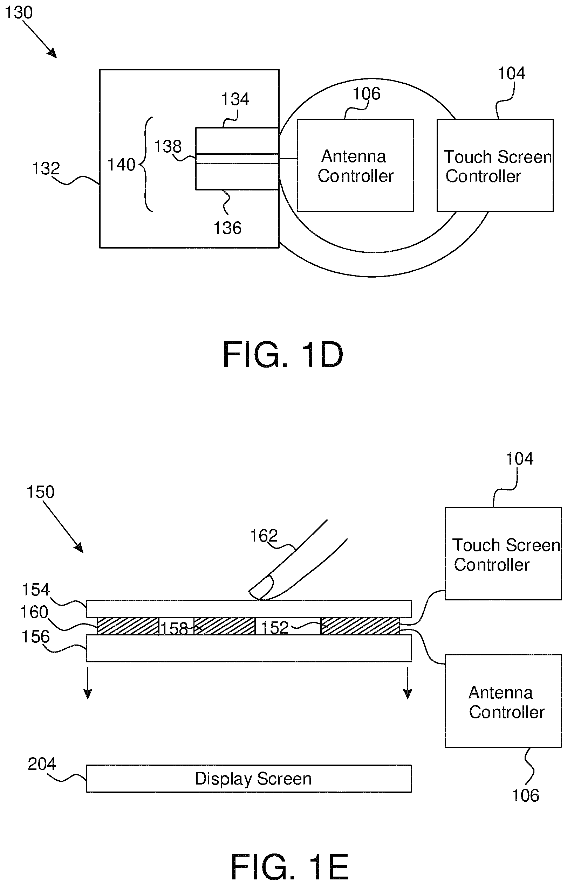

Figure 1D illustrates a topological view of another example touch sensor device 130, in accordance with another example embodiment. Figure 1D illustrates that some electromagnetically conductive elements can be used as an antenna only, some electromagnetically conductive elements can be used as a touch sensor only, and some electromagnetically conductive elements can be shared for use as both an antenna and a touch sensor. The touch sensor device 130 includes a layer having a first conductive area 132, a second conductive area 134, a third conductive area 136, and a fourth conductive area 138. In example embodiments, the electromagnetically conductive element of any one or more of the first conductive area 132, the second conductive area 134, the third conductive area 136, and the fourth conductive area 138 can be non-mesh conductive material or can be transparent conductive mesh material. In the example touch sensor device 130, only the touch sensor controller 104 has a conductive lead to operate the first conductive area 132, and the antenna controller 106 does not. Therefore, the antenna controller 106 does not use the first conductive area 132 as an antenna in this example. The second conductive area 134, the third conductive area 136, and the fourth conductive area 138 can collectively function as one antenna 140 and are collectively operated by the antenna controller 106 as an antenna. As well, the touch sensor controller 104 is connected by respective conductive leads to the second conductive area 134 and the third conductive area 136 to operate as a touch sensor. In this example, the fourth conductive area 138 is only used as an antenna and not as a touch sensor.

Referring still to Figure 1D, in an example embodiment, the antenna 140 is a parasitic patch antenna. The parasitic patch antenna 140 is generally formed by discrete electromagnetically conductive elements (which can be referred to as "strips" or "metal strips"), in this case the second conductive area 134, the third conductive area 136, and the fourth conductive area 138. The strips can be formed of transparent conductive mesh. The strips are separated by a dielectric material (can also be referred to as an "insulating material" for the purposes of example embodiments). Depending on the dielectric material and the distances between the second conductive area 134, the third conductive area 136, and the fourth conductive area 138, the strips interact with each other to collectively operate as the parasitic patch antenna 140. For example, there can be induction, electromagnetic coupling, capacitance, or other interactions that occur between the second conductive area 134, the third conductive area 136, and the fourth conductive area 138. The strips are flat and thin (depth not specifically shown here). In an example embodiment, the particular number, dimensions and spacing of the strips can be calculated or selected based on the desired frequency response of the parasitic patch antenna 140.

In an example embodiment of the parasitic patch antenna 140, not all of the conductive areas need a direct conductive path to the antenna controller 106. For example, in Figure 1D, only the strip of the fourth conductive area 138 is conductively connected to the antenna controller 106. The remaining strips of the second conductive area 134 and the third conductive area 136 do not necessarily need to conductively connect to the antenna controller 106, because their signals electromagnetically interact with the fourth conductive area 138. In other example embodiments, not shown, antenna controller 106 is connected to any one or more of the second conductive area 134, the third conductive area 136, and the fourth conductive area 138. In other example embodiments, not shown here, the antenna controller 106 is conductively connected to all of the second conductive area 134, the third conductive area 136, and the fourth conductive area 138, therefore such an antenna 140 operates collectively as a (non-parasitic) patch antenna or a microstrip patch antenna. The particular dimensions of the strips are calculated or selected based on the desired frequency response of the patch antenna.

In Figure 1D, the strips of the parasitic patch antenna 140 are on the same layer as the touch sensor device 130. In other example embodiments, not shown, additional strips of the parasitic patch antenna are located on additional layers of the touch sensor device 130, or can be in different orientations that are not necessarily parallel to the layers of the touch sensor device 130, or at least one of the strips can be across more than one layer of the touch sensor device 130.

Figure 1E illustrates an example cross-sectional profile of an example touch sensor device 150, in accordance with an example embodiment. The touch sensor device 150 includes a plurality of layers, and includes an electromagnetically conductive element 152 in one of the layers. The touch sensor controller 104 and the antenna controller 106 are configured to operate the electromagnetically conductive element 152 for their respective touch sensor or antenna functions, at different times. The electromagnetically conductive element 152 is covered with at least one transparent dielectric layer 154 (one layer shown in Figure 1E).

The touch sensor controller 104, for the touch sensor function, can be configured to detect a touch event using the electromagnetically conductive element 152. The touch event can be performed by a conductor 162 such as a finger (as shown), conductive glove or conductive stylus. The conductor 162 touches a surface of the transparent dielectric layer 154. The electromagnetically conductive element 152 is used by the touch sensor controller 104 to detect a change in capacitance of the transparent dielectric layer 154 due to the touch event by the conductor 162.

The electromagnetically conductive element 152 is supported by a transparent substrate 156, that is typically formed of insulating material (dielectric material). Additional layers and substrates (not shown) can be layered below the transparent substrate 156. The touch sensor device 150 can then be overlaid onto a display screen 204, forming a transparent window over the display screen 204 that can be used for both the touch sensor function and the antenna function. This collectively forms a touch screen (also referred to as a touch display).

In an example embodiment, additional electromagnetically conductive elements 158, 160 can be connected to and used by one or both of the touch sensor controller 104 and the antenna controller 106. As shown, the electromagnetically conductive element 152 and the additional electromagnetically conductive elements 158, 160 are on the same layer and are separated by insulating material (shown as white space in Figure 1E).

In Figure 1E, in various example embodiments, the layers are flat or curved. In various example embodiments, the layers are rigid or flexible. Each layer is not necessarily a flat rigid plane. In various example embodiments, there are additional layers that contain one or more electromagnetically conductive elements that can be used as the antenna, as the touch sensor, or as both.

In various example embodiments, the cross-sectional profile or layers of Figure 1E can be the general cross-sectional profile for any one of the touch sensor devices 100 (Figure 1A), the touch sensor device 110 (Figure 1B), touch sensor device 120 (Figure 1C), or the touch sensor device 130 (Figure 1D), with suitable modifications as necessary.

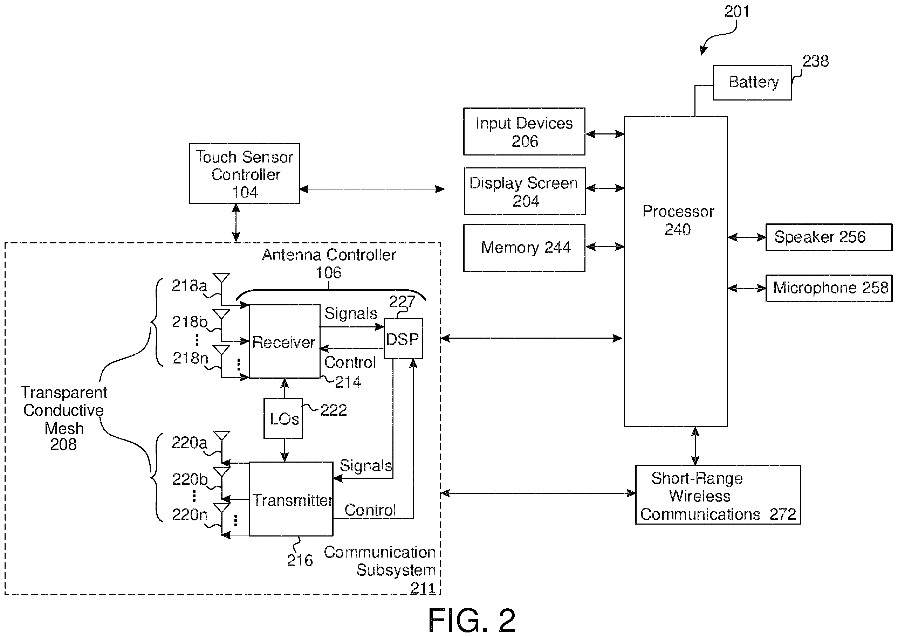

Figure 2 shows a block diagram illustrating a wireless communication device 201 to which example embodiments can be applied. The wireless communication device 201 includes a communication subsystem 211. A touch screen of the wireless communication device 201 includes a display screen 204 and a touch sensor device (also referred to as a touch sensor overlay). The touch sensor device has a touch-sensitive input surface which overlays the display screen 204. The touch sensor device is connected to the touch sensor controller 104. The touch sensor device uses conductive material such as a transparent conductive mesh 208 as a touch sensor to detect touch positions. In various example embodiments, the display screen 204 can be flat or curved. In various example embodiments, the display screen 204 can be rigid or flexible. In an example embodiment, the touch screen can be provided as a separately manufactured or Original Equipment Manufacture (OEM) device, that can be subsequently integrated with the wireless communication device 201, or other devices, after manufacture.

The communication subsystem 211 may generally be used by the wireless communication device 201 for enabling wireless communications to be received, transmitted, or both. The communication subsystem 211 may for example be used by any of the various subsystems of the mobile communication device 201 that may require wireless communications. The communication subsystem 211 includes the antenna controller 106, including a receiver 214, a transmitter 216, and associated components, local oscillators (LOs) 222, and a processing module such as a digital signal processor (DSP) 227. The DSP 227 acts as a local controller for the communication subsystem 211, and may be in communication with the antenna controller 106. The receiver 214 is associated with one or more antenna elements 218a, 218b, ..., 218n (each or collectively referred to as 218), and the transmitter 216 is associated with one or more antenna elements 220a, 220b, ..., 220n (each or collectively referred to as 220). As would be understood in the art, the antenna elements 218, 220 are electromagnetically conductive elements for receiving or transmitting (or both) of electromagnetic signals. Although antenna elements 218 and 220 are illustrated separately, in some example embodiments at least some of the antenna elements 218, 220 are shared by both receiver and transmitter, and enabled for both transmitting and receiving.

As will be apparent to those skilled in the field of communication, the particular design of the wireless communication subsystem 211 depends on the wireless network and any associated frequency or frequency bands in which mobile communication device 201 is designed to operate. In some example embodiments, the electrically conductive properties of the antenna elements 218, 220 are also used by the touch sensor controller 104 as a touch sensor. The antenna elements 218, 220 are part of the transparent conductive mesh 208 that is used by the touch sensor controller 104 as the touch sensor.

The antenna elements 218, 220 are the "antenna areas" as described in greater detail herein, and can be formed of conductive mesh. As well, some of the antenna elements 218, 220 do not necessarily need to be directly conductively connected to any of the transmitter 216 or the receiver 214, for example in the case of a parasitic patch antenna.

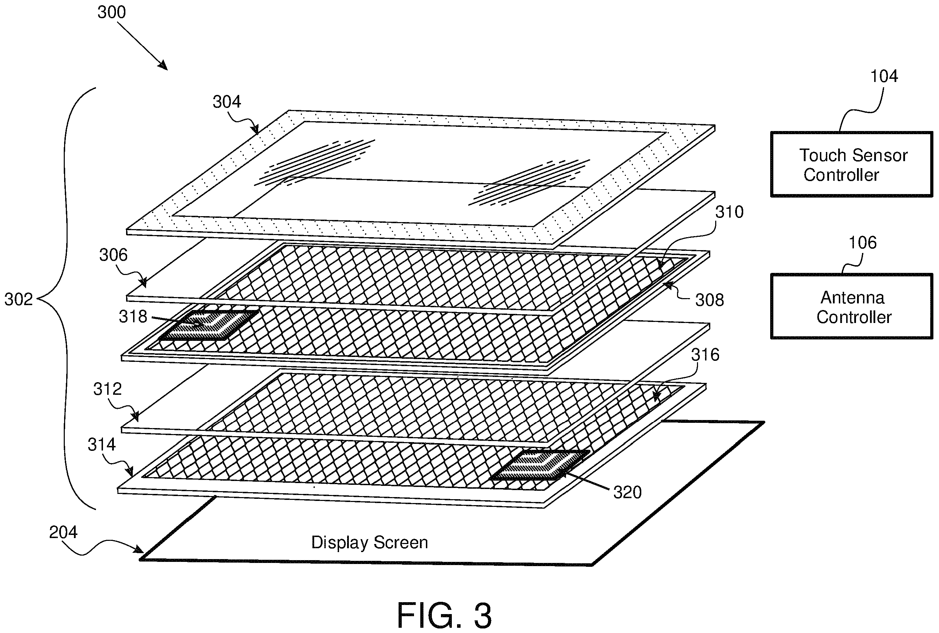

Figure 3 illustrates an exploded perspective diagrammatic view of an example touch screen 300, in accordance with an example embodiment. The touch screen 300 includes a touch sensor device 302 overlaid onto the display screen 204. The touch sensor device 302 provides a transparent window over the display screen 204 and is used as both a touch sensor and an antenna.

The touch sensor device 302 includes a transparent dielectric layer 306, a layer of first conductive mesh 310, and a layer of second conductive mesh 316. The first conductive mesh 310 includes at least one antenna area 318 (one shown here) that is used as an antenna. The second conductive mesh 316 includes at least one antenna area 320 (one shown here) that is used as an antenna. The first conductive mesh 310 and the second conductive mesh 316 are transparent. The first conductive mesh 310 is insulated from the second conductive mesh 316.

As shown in Figure 3, the first conductive mesh 310 can be supported by a first transparent substrate 308. As shown in Figure 3, the second conductive mesh 316 can be supported by a second transparent substrate 314. A third transparent dielectric layer 312 can be layered between the first transparent substrate 308 and the second transparent substrate 314. Additional transparent layers (not shown) may be present between the second transparent substrate 314 and the display screen 204.

As shown in Figure 3, a cover 304 overlays the first transparent substrate. The cover is formed of transparent dielectric material in order to maintain the capacitive touch sensor properties of the touch sensor function. The cover 304 can be made of glass in an example embodiment. Generally, the cover 304 includes relatively strong material to resist exterior elements, scratching, bending (when rigidity is desired), etc. The cover 304 can have additional coating such as anti-reflection coating and ultraviolet protection coating. In Figure 3, the cover 304 is shown with an opaque border. In other example embodiments, not specifically shown in Figure 3, there is no opaque border and the transparency of the cover 304 extends edge-to-edge, for example.

In an example embodiment, the first transparent dielectric layer 306 and the third transparent dielectric layer 312 are formed of an optically clear adhesive (OCA) so as to assist in binding different layers together. In an example embodiment, more than one layer may be used in place of each of the first transparent dielectric layer 306 and the third transparent dielectric layer 312.

In an example embodiment, the first transparent substrate 308 and the second transparent substrate 314 are formed of an insulating material (dielectric material).

In an example embodiment, the first conductive mesh 310 is etched onto the first transparent substrate 308, and the second conductive mesh 316 is etched on the second transparent substrate 314. In an alternate example embodiment, not shown, the second conductive mesh 316 is positioned (e.g. by etching) onto the underside of the first transparent substrate 308, and therefore the second transparent substrate 314 and the third transparent dielectric layer 312 are not needed.

The touch sensor controller 104 can be configured to detect a touch event from a conductor (e.g. finger) on an exterior surface of the cover 304. A change in capacitance resulting from the touch event is detectable using the first conductive mesh 310 and the second conductive mesh 316.

In an example embodiment, the first conductive mesh 310 has conductive material that is arranged in rows. The second conductive mesh 316 has conductive material that is arranged in columns, that is orthogonal to the rows. For example, a touch event can occur on the surface of the cover 304. The touch sensor controller 104 can determine which row and which column has a change in capacitance due to the touch event, and the touch sensor controller 104 is configured to determine where the touch event has occurred on the cover 304. The location of the touch event can be referred to as a "touch position" or a "touch point". The touch position can correspond to desired inputs of a user interface that is displayed on the display screen 204. Reference to touch position can mean a specific point or a localized area that received the touch event on the surface of the cover 304.

The antenna controller 106 can operate the antenna areas 318, 320 as an antenna. The antenna areas 318, 320 are also used as touch sensors. The antenna area 318 of the first conductive mesh 310 and the antenna area 320 of the second conductive mesh 316 are at different touch positions. In other words, the antenna area 318 of the first conductive mesh 310 and the antenna area 320 of the second conductive mesh 316 are not vertically aligned with each other when viewed from above through the cover 304. This allows touch positions to be detected even when one antenna area 318, 320 in the first conductive mesh 310 or the second conductive mesh 316 is currently being used as an antenna, because the other of the first conductive mesh 310 or the second conductive mesh 316 can be used to detect a touch position at the same area.

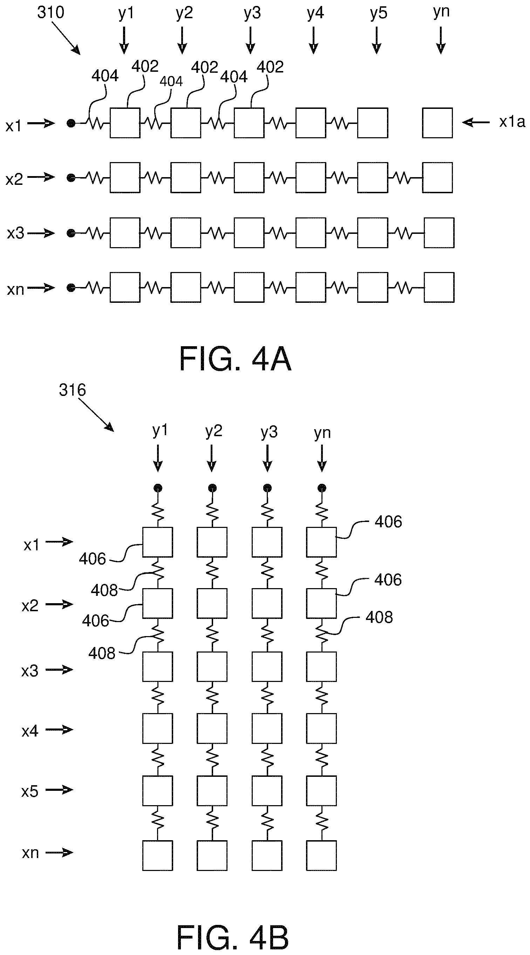

Figures 4A illustrates an example arrangement of the first conductive mesh 310, and Figure 4B illustrates an example arrangement of the second conductive mesh 316, in accordance with an example embodiment. In Figure 4A, the first conductive mesh 310 has its transparent conductive material arranged in a plurality of rows, indicated as rows x1, x2, x3, ..., xn. In an example embodiment, each row of transparent conductive material is separated by insulating material, for example the first transparent substrate 308 (Figure 3). As shown in Figure 4A, each row can comprise a series of conductive mesh areas 402 (shown as squares) connected in series by one or more respective conductive leads (shown as a respective resistor 404). Typically, the connection in series is one or two respective conductive leads. Each conductive mesh area 402 is used to detect a touch event in its row based on a change of capacitance, and therefore it can be determined which row was touched. A resistor 404 is used to represent each conductive lead because the one or two conductive leads generally have lower conductivity (higher resistivity) than the interconnections within each conductive mesh area 402.

In Figure 4B, the second conductive mesh 316 has its transparent conductive material arranged in a plurality of columns, indicated as columns y1, y2, y3, ..., yn. In an example embodiment, each column of transparent conductive material is separated by insulating material, for example the second transparent substrate 314 (Figure 3). As shown in Figure 4B, each column can comprise a series of conductive mesh areas 406 (shown as squares) connected in series by a conductive lead (shown as a respective resistor 408). Each conductive mesh area 406 can be used to detect a touch event in its column based on a change of capacitance, and therefore it can be determined which column was touched. Figures 4A and 4B therefore illustrate how the rows and columns of the transparent conductive material can be used to determine a specific row (x) and column (y) of a touch position on the touch screen 300 (Figure 3).

In an example embodiment, each square conductive mesh area 402 in the first conductive mesh 310 is vertically aligned with a square conductive mesh area 406 in the second conductive mesh 316, so as to determine the specific (x) and (y) pair of squares, and therefore the corresponding (x) and (y) touch position on the cover 304, that had received the touch event.

Referring still to Figure 4A, at the end of one of the rows x1, there is an antenna area x1a formed of transparent conductive mesh that can be used as both an antenna and a touch sensor. The antenna area x1a is square shaped, similar to the other square conductive mesh areas 402. The antenna area x1a is insulated from the series of conductive mesh areas 402 in row x1. The antenna area x1a can be used to detect a change in surface capacitance, when operating as the touch sensor, for example. By locating the antenna area x1a at the end of the row x1, this provides an easier position for a respective conductive trace to be made to the touch sensor controller 104 and the antenna controller 106. The antenna area x1, being of transparent conductive mesh, also has optical (visual) uniformity with the remaining rows and their conductive mesh areas 402. The antenna area x1 can be dimensioned as a square of approximately the same dimensions as one of the conductive mesh areas 402, for optical (visual) uniformity.

The touch sensor function of the first conductive mesh 310 and the second conductive mesh 316, to individually detect capacitance at an intersection of a row and a column, is referred to as self-capacitance. In another example embodiment, mutual capacitance is used to determine a touch position that occurred at a specific row and a specific column, as is understood by those skilled in the art. Each row and column pair is scanned by the touch sensor controller 104 using a suitable duty cycle and order of scanning, as understood in the art. For example, one row is activated for detection, and then every column that intersects with that row is sequentially activated for detection in a scanning order, in order to measure the capacitance value at each row-column intersection. This is repeated for the next row, and cycles through all of the rows. This allows multiple touch positions to be detected, in an example embodiment.

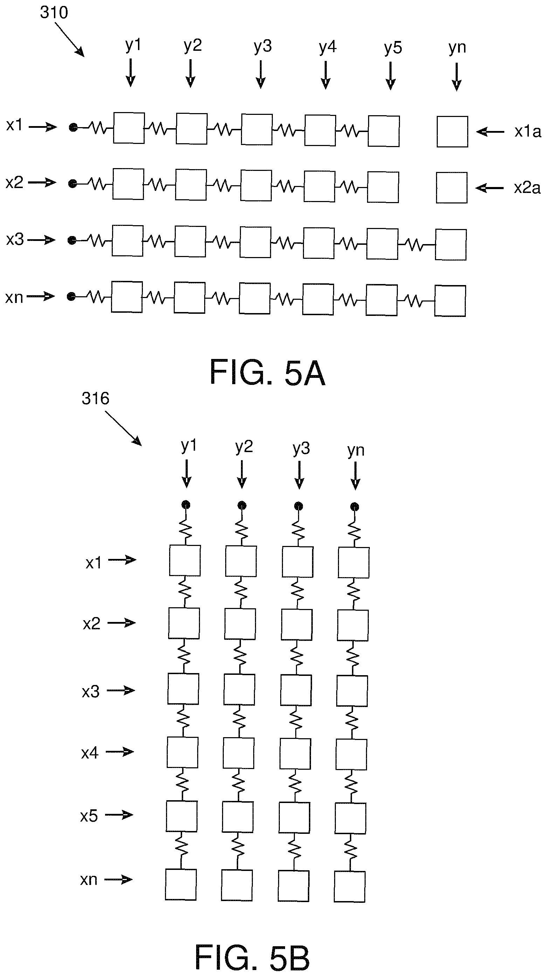

Figures 5A illustrates another example arrangement of the first conductive mesh 310 (Figure 3), and Figure 5B illustrates another example arrangement of the second conductive mesh 316, in accordance with an example embodiment. This arrangement is similar to the arrangement of Figures 4A and 4B. Referring to Figure 5A, at the end of two (or more) of the rows x1, x2, there is a respective antenna area x1a, x2a formed of transparent conductive mesh that can be used for antenna function and as a touch sensor. In an example embodiment, antenna areas x1a, x2a collectively define a parasitic patch antenna, and are separated from each other by insulating material (dielectric material). The antenna areas x1a, x2a are insulated from the series of conductive mesh areas 402 in their respective rows (x1, x2). The insulation is provided by the first transparent substrate 308.

In another example embodiment, not specifically shown in Figure 5A, the antenna areas x1a, x2a are conductively connected and collectively define a (non-parasitic) patch antenna that spans across more than row.

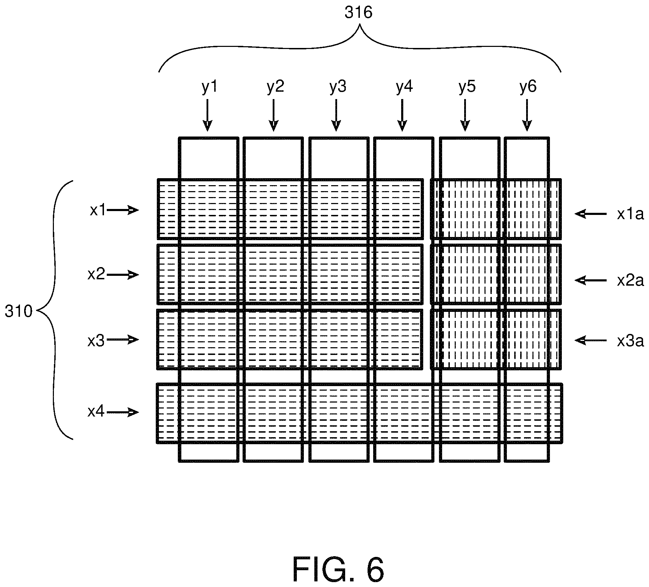

Figure 6 illustrates another example arrangement of respective rows and columns of the first conductive mesh 310 and the second conductive mesh 316 (Figure 3), in accordance with an example embodiment. A touch position can be determined for a specific row and column combination. The example arrangement has four rows (x1, x2, x3, x4) and six columns (y1, y2, y3, y4, y5, y6), that can be used for touch sensor function. The rows and columns can be entire rectangular rows/columns of transparent conductive mesh in an example embodiment, or in other example embodiments can be a connected series of conductive mesh areas (e.g. squares). A respective antenna area (x1a, x2a, x3a) is located at the end of each row (x1, x2, x3). The antenna areas (x1a, x2a, x3a) are formed of transparent conductive mesh, in an example embodiment. The antenna areas (x1a, x2a, x3a) are insulated from their respective rows (x1, x2, x3). The antenna areas (x1a, x2a, x3a) are used for the antenna function. At least one of the antenna areas (x1a, x2a, x3a) is also used as a touch sensor. The antenna areas (x1a, x2a, x3a) may span more than one column, such as columns (y5, y6) in this example.

In an example embodiment, the antenna areas (x1a, x2a, x3a) collectively define a parasitic patch antenna, and are separated from each other by insulating material (dielectric material). In an example embodiment, only one conductive trace from the parasitic patch antenna to the antenna controller 106 is used, typically from the middle antenna area (x2a).

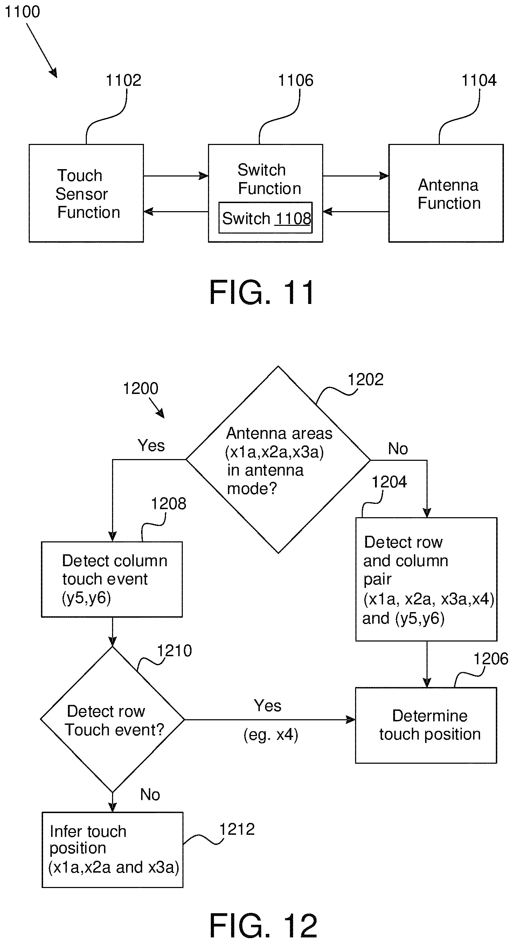

In Figure 6, a touch position can be determined for row and column combinations of (x1, x2, x3) and (y1, y2, y3, y4), by detecting a change in capacitance in a row and a column intersection. A touch position can also be determined using row and column combinations of row x4 and columns (y1, y2, y3, y4), by detecting a change in capacitance at a row and a column intersection. To determine a touch position for row and column combinations of (x1a, x2a, x3a) and (y5, y6), an example embodiment is described with respect to Figure 12 as follows.

Figure 12 illustrates an example controller-implemented method 1200 for determining a touch position, in accordance with an example embodiment. The method 1200 illustrates how to determine the touch position for row and column combinations of (x1a, x2a, x3a) and (y5, y6) in Figure 6, in an example embodiment. In example embodiments, the method 1200 can be performed by the touch sensor controller 104.

At step 1202, the touch sensor controller 104 determines whether the antenna areas (x1a, x2a, x3a) are in antenna mode (antenna function), for example by receiving a notification from the processor 240 or the antenna controller 106. If not, the touch sensor controller 104 operates the antenna areas (x1a, x2a, x3a) as touch sensors to detect touch positions. At step 1204, the touch sensor controller 104 can detect a touch event at a specific row and column pair. At step 1206, the touch sensor controller 104 determines the specific touch position from the detected row and column pair.

If the antenna areas (x1a, x2a, x3a) are in antenna mode (antenna function), at step 1208 the touch sensor controller 104 may detect a touch event at one of the columns (y5, y6). At step 1210, the touch sensor controller 104 determines whether there is a touch event in one of the rows. If so (row x4 would be the only row in the example of Figure 6), at step 1206 the touch sensor controller 104 determines the specific touch position for the determined row (x4) and column (y5 or y6).

Referring again to step 1210, if there has been no touch event detected by the touch sensor controller 104 at any of the rows, at step 1212 it can be inferred that a touch position occurred at the collective region of the antenna areas (x1a, x2a, x3a) at the detected column (y5 or y6).

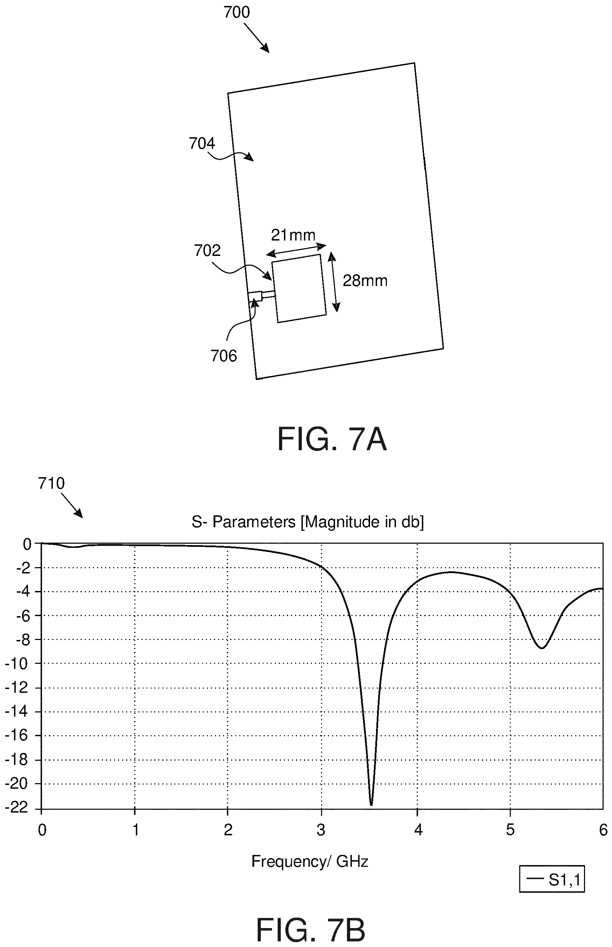

Figure 7A illustrates another example touch sensor device 700 having an integrated antenna 702, in accordance with an example embodiment. The antenna 702 is used as an antenna by the antenna controller 106, and at least part of the antenna 702 is used as a touch sensor by the touch sensor controller 104 as well. Conductive connection can be made from the antenna 702 to the antenna controller 106 or the touch sensor controller 104 by connection to metal strips 706. In Figure 7A, the antenna 702 has an area of 21 mm by 28 mm. Other dimensions may be used in other example embodiments, for example depending on design parameters, screen space limitations and the frequency requirements.

In an example embodiment, the antenna 702 is formed of one or more metal strips, defining a patch antenna. The antenna 702 may be formed of transparent conductive mesh. The remainder of the touch sensor device 700 includes transparent conductive mesh 704 that can be used as an antenna and as a touch sensor. In an example embodiment, the transparent conductive mesh 704 of the touch sensor device 700 can be arranged in rows or columns, as described herein (not shown here).

Figure 7B illustrates an S11 graph 710 in dB versus frequency of the antenna 702 of Figure 7A. S11 is a measure of how much of the power to be transmitted by the antenna 702 is reflected back by the antenna 702. A smaller S11 indicates a higher amount of the energy input to the antenna has been transmitted by the antenna. As shown in the graph 710, there is peak transmission (lowest reflection) in the 3.5 GHz range, and so the antenna 702 is suitable for various wireless applications such as proposed 5th Generation (5G) that uses the 3.5 GHz to 4.2 GHz range, and other wireless wide area networks (WWANs). The particular peak transmission can be varied for a specific operating frequency, for example by designing a particular dimension of the antenna 702. The illustrated simulation is for the antenna 702 being formed by one or more non-mesh metal strips (patch antenna). The antenna 702 can also be a transparent conductive mesh in other example embodiments, and can be dimensioned to be approximately the same, with suitable adjustments to account for conductive mesh versus non-mesh, to achieve peak transmission at 3.5 GHz or other desired frequencies.

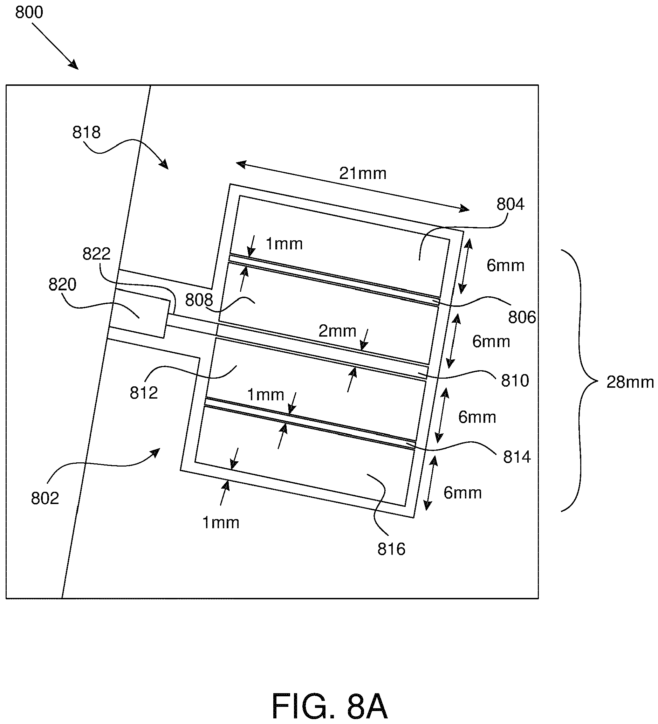

Figure 8A illustrates another example touch sensor device 800 having an integrated antenna 802, in accordance with an example embodiment. The antenna 802 is used as an antenna, and at least part of the antenna 802 is used as a touch sensor as well. In an example embodiment, the integrated antenna 802 is formed of a plurality of metal strips 804, 806, 808, 810, 812, 814, 816, the metal strips being separated by insulating material, defining a parasitic patch antenna. There is conductive connection from the metal strip 810 to the antenna controller 106 by way of one or more further metal strips 820, 822. There is conductive connection (not shown here) from the metal strips 804, 808, 812, 816 to the touch sensor controller 104.

In an example embodiment, a combined area of the metal strips is 21 mm by 28 mm. Other dimensions may be used in other example embodiments, for example depending on design parameters, screen space limitations and the frequency requirements. In an example embodiment, the metal strips 806, 810, 814 are not used for touch sensor function and are only used for antenna function.

In an example embodiment, not shown here, the remainder of the touch sensor device 800 includes transparent conductive mesh 818 that can be used for the antenna function and the touch sensor function. In an example embodiment, the transparent conductive mesh 818 of the touch sensor device 800 can be arranged in rows or columns, as described herein (not shown here).

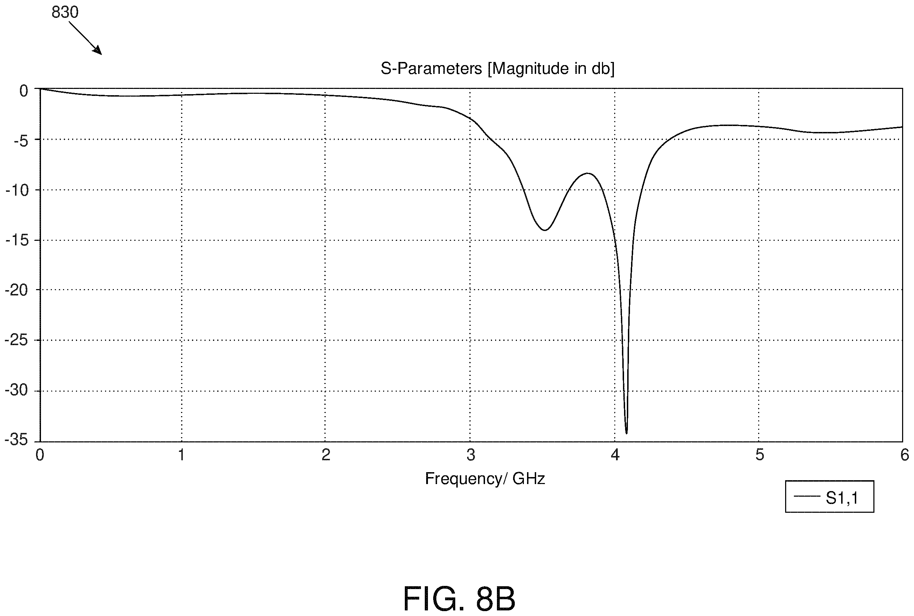

Figure 8B illustrates a S11 graph 830 in dB versus frequency of the antenna 802 of Figure 8A. As shown in the graph 830, there is peak transmission (lowest reflection) in the 4.2 GHz range, and so is suitable for various wireless applications such as proposed 5th Generation (5G) that uses the 3.5 GHz to 4.2 GHz range, and other wireless wide area networks (WWANs). The simulation is for the antenna 802 being formed by one or more non-mesh metal strips. The antenna 802 can also be a transparent conductive mesh in other example embodiments, and can be dimensioned to be approximately the same, with suitable adjustments to account for conductive mesh versus non-mesh, to achieve peak transmission at 4.2 GHz or other desired frequencies.

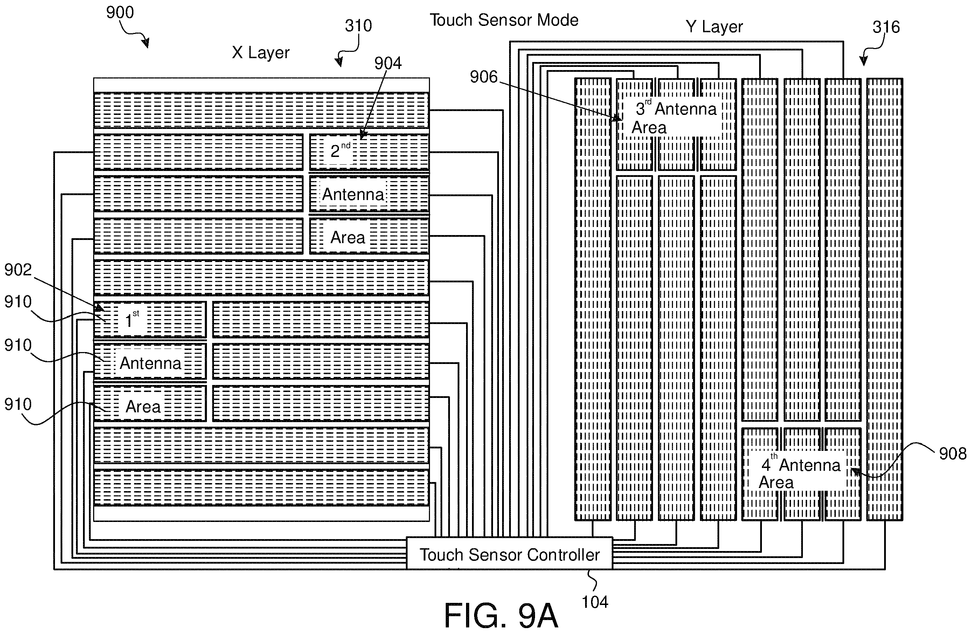

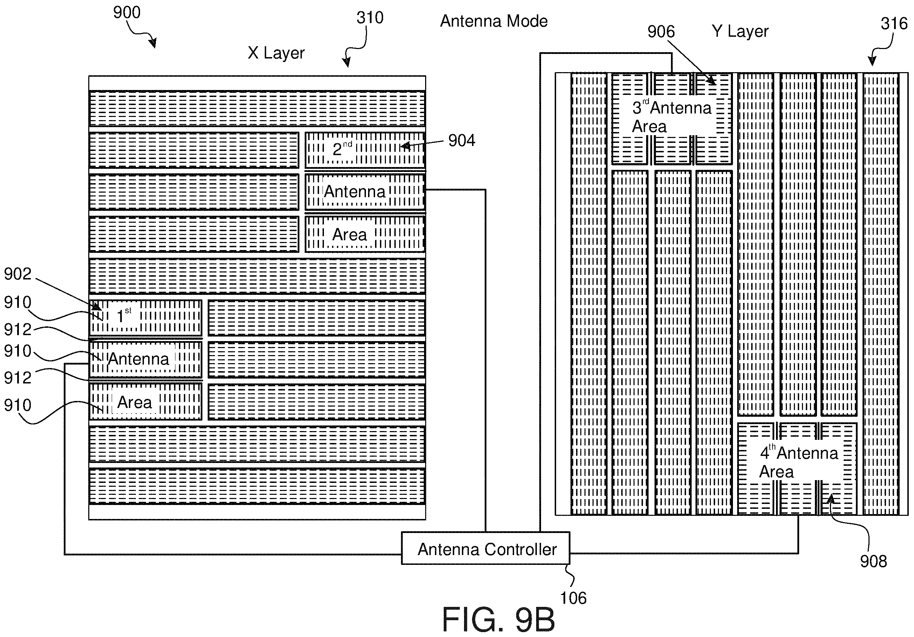

Figure 9A illustrates an example touch sensor device 900 in an example arrangement of the first conductive mesh 310 (e.g., "X Layer" in rows) and the second conductive mesh 316 (e.g., "Y Layer" in columns), as introduced above in reference to Figures 3, 4A and 4B. Figure 9A illustrates the touch sensor mode of operation, and Figure 9B illustrates the antenna mode of operation. In the example embodiment shown, there are four antenna areas. The first antenna area 902 and second antenna area 904 are part of the first conductive mesh 310; and the third antenna area 906 and fourth antenna area 908 are part of the second conductive mesh 316.

The antenna areas 902, 904, 906, 908 are not vertically aligned with each other when viewed from above through the first conductive mesh 310 and the second conductive mesh 316. The allows touch positions to be detected when one antenna area of the first conductive mesh 310 or the second conductive mesh 316 is currently being used as an antenna, so that the other of the first conductive mesh 310 or the second conductive mesh 316 can be used to detect a touch position.

The first antenna area 902, for example, is a parasitic patch antenna that has three conductive elements 910 that span three rows of the first conductive mesh 310 and that are insulated from each other. Similarly, the other antenna areas 904, 906, 908 are parasitic patch antennas that each have three conductive elements that span three rows or columns, as shown. In other example embodiments, not shown, the antenna areas 902, 904, 906, 908 are non-parasitic patch antennas.

Figure 9A illustrates the touch sensor mode of operation. The three conductive elements for each of the antenna areas 902, 904, 906, 908 are used to detect individual touch positions, for example. Figure 9B illustrates the antenna mode of operation. For the first antenna area 902, for example, the three conductive elements 910, and the intermediary insulating areas that contain longitudinal conductive elements 912, collectively operate as a single parasitic patch antenna. For the single parasitic patch antenna, a single conductive lead (trace) can connect the center conductive element 910 of the first antenna area 902 to the antenna controller 106, and the other conductive elements do not require conductive connection to the antenna controller 106. Similar configurations and connections are shown for antenna areas 904, 906, 908.

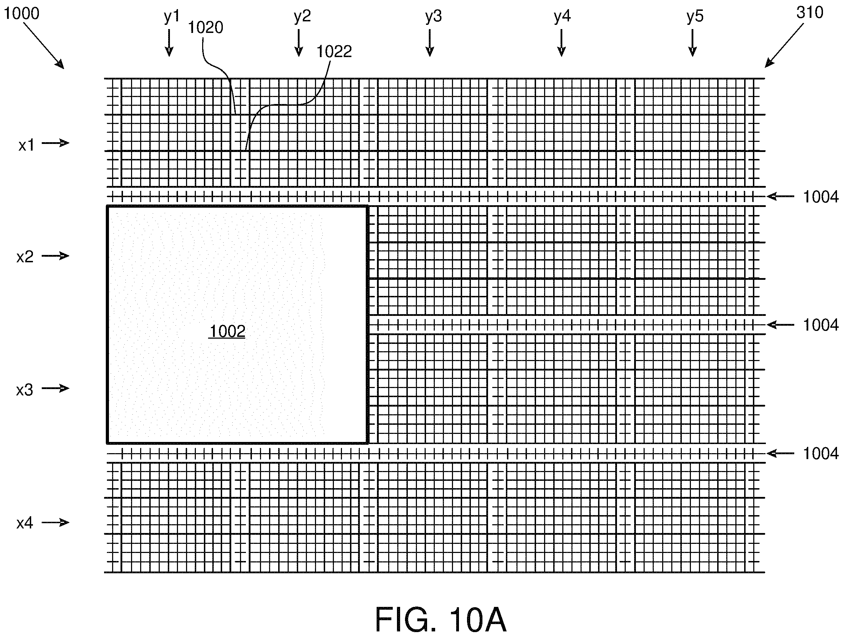

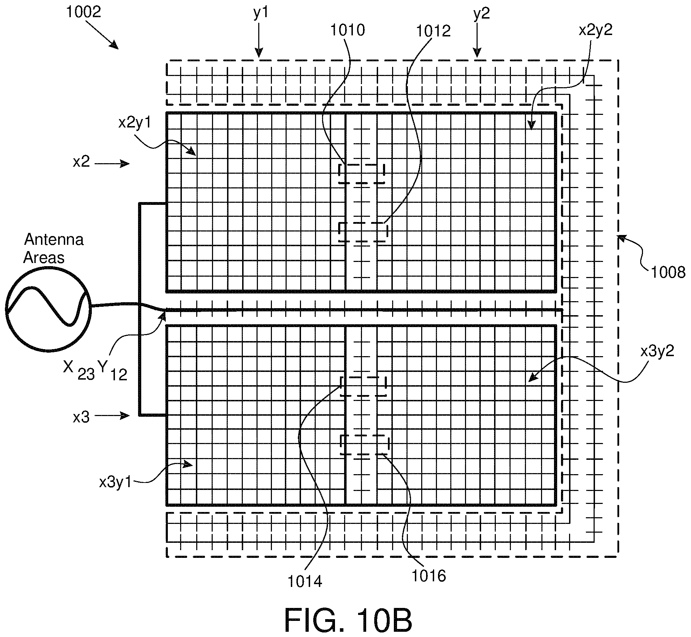

Figure 10A illustrates another example layer of a touch sensor device 1000, in accordance with an example embodiment. Figure 10B illustrates in greater detail an example antenna area 1002 of the touch sensor device 1000. In Figure 10A, in an example embodiment, the touch sensor device 1000 is an example arrangement of the first conductive mesh 310 (Figure 3). For example, the first conductive mesh 310 and the antenna area 1002 may be formed of transparent conductive mesh. The antenna area 1002 is used as an antenna. At least part of the antenna area 1002 can be used as the touch sensor. There is more than one antenna area 1002 in other example embodiments. In an example embodiment, the first conductive mesh 310 can be arranged in rows, as in Figure 4A.

In Figure 10A, the touch sensor device 1000 has a number of rows x1, x2, x3, x4, that intersect with a number of columns y1, y2, y3, y4, y5, etc. (e.g., the columns that are defined by the second conductive mesh 316, as in Figure 4B, not shown here). Each row is a series of conductive mesh areas. Each mesh area is square shaped in this example. In Figure 10A, adjacent conducive mesh areas in the series are connected by two conductive leads, for example first conductive lead 1020 and second conductive lead 1022 as labelled in Figure 10A. More or fewer leads may be used in other example embodiments.

In the touch sensor device 1000, between each of the rows x1, x2, x3, x4 is a longitudinal region 1004 that insulates a row from an adjacent row. Within each longitudinal region 1004 is a longitudinal conductive mesh or strip. The longitudinal conductive mesh or strip has mesh interconnections that provide for optical (visual) uniformity with the rest of the mesh areas. The longitudinal conductive mesh is not used for any touch sensor function. The longitudinal conductive mesh is used for antenna function only, as described in greater detail herein below.

In example embodiments, not shown, a similar arrangement of transparent conductive mesh can be made for the second conductive mesh 316 (Figure 3), for example as columns as in Figure 4B. The second conductive mesh 316 can have one or more antenna areas. In other example embodiments, the second conductive mesh 316 is used as a touch sensor only and does not have any antenna areas, and only the first conductive mesh 310 is used as an antenna.

Figure 10B illustrates the antenna area 1002 in greater detail. The antenna area 1002 includes a plurality of sub areas, being sub area x2y1, sub area x2y2, sub area x3y1, sub area x3y2, and sub area x23y12. These sub areas collectively define a parasitic patch antenna, in which at least one of the sub areas is insulated from the other sub areas. Sub area x2y1, sub area x2y2, sub area x3y1, and sub area x3y2 are each transparent conductive mesh in a generally square shape, as shown.

In an example embodiment, sub area x23y12 is a longitudinal region that also includes therein a longitudinal conductive mesh or strip, for the purposes of optical (visual) uniformity with the corresponding insulating area 1004 (Figure 10A). Sub area x23y12 also provides insulation between sub areas. Sub area x23y12 can itself be used for antenna function.

In an example embodiment, one or more isolation areas 1008 provide insulation between the antenna area 1002 and the rest of the touch sensor device 1000. As shown in Figure 10B, the one or more isolation areas 1008 can include longitudinal conductive mesh or strip, for the purposes of optical (visual) uniformity.

In Figure 10B, the sub area x2y1 and the sub area x2y2 are connected in series, for example using first conductive lead 1010 and second conductive lead 1012, as shown. The sub area x3y1 and the sub area x3y2 are connected in series, for example using first conductive lead 1014 and second conductive lead 1016, as shown. More or fewer conductive leads are used in other example embodiments, typically fewer than the number of interconnections within the mesh of the sub areas. Rows of the sub areas are insulated from each other. In an example embodiment, for operation as a parasitic patch antenna, the antenna controller 106 is conductively connected to the sub area x23y12 and not to sub area x2y1 or sub area x2y1.

In another example embodiment, not shown, all of the sub-areas of the antenna area 1002 are conductively connected, defining a non-parasitic patch antenna or a microstrip patch antenna.

Figure 11 illustrates an example method 100 for operating one of the electromagnetically conductive elements of the touch screen, in accordance with an example embodiment. The method 100 is performed by the processor 240, in an example embodiment. At step 1102, the processor 240 instructs or controls the touch sensor controller 104 to operate the electromagnetically conductive element as the touch sensor, for the touch sensor function. At step 1104, the processor 240 instructs or controls the antenna controller 106 to operate the electromagnetically conductive element as the antenna, for the antenna function. The touch sensor function and the antenna function do not operate at the same time. The processor 240 includes a software module that performs a switch function 1106 to switch operation of the electromagnetically conductive element between the touch sensor function and the antenna function. In other example embodiments, aspects of the method 100 can be executed by any one of the touch sensor controller 104, the antenna controller 106, or another controller.

In an example, the processor 240 executes the switch function 1106 by causing only one of the touch sensor controller 104 and the antenna controller 106 to use the electromagnetically conductive element as the touch sensor or the antenna. If the electromagnetically conductive element is already in touch sensor mode, and the switch function 1106 determines that the electromagnetically conductive element should be in touch sensor mode, then the processor 240 maintains the electromagnetically conductive element as being operated in touch sensor mode. Similarly, if the electromagnetically conductive element is already in antenna mode, and the switch function 1106 determines that the electromagnetically conductive element should be in antenna mode, then the processor 240 maintains the electromagnetically conductive element as being operated in antenna mode.

In an example, the processor 240 executes the switch function 1106 by controlling a switch 1108, a hub, a router, a relay, a controllable bus, a multiplexer (MUX), etc., in order to switch the conductive connection between the electromagnetically conductive element and one of the touch sensor controller 104 or the antenna controller 106.

Examples of the switch function 1106 will now be described. In one example embodiment, the antenna function has a specified duty cycle for each electromagnetically conductive element, and the touch sensor function is used when the antenna function is off cycle. In another example embodiment, the switch function 1106 is based on a whitelisted application that is running on the wireless communication device 201. For example, the antenna function may be more suitable for a calling or videoconferencing application, a video application, or a file transfer, because these applications can require more wireless communication data, and the switch function 1106 therefore switches to the antenna function for these applications. The touch sensor function may be more suitable for a touch screen based video game, drawing application, etc., and the switch function 1106 therefore can switch to the touch sensor function for these applications. As well, some applications may only require a part of the screen for touch sensor function, such as some applications that display a virtual keyboard that is not on a same location on the touch screen as the electromagnetically conductive element used as an antenna. A database, list or table of applications, such as a whitelist or a blacklist, can be stored in the memory 244 (Figure 2) to be referenced by the processor 240 to decide to perform the switch function 1106, in an example embodiment.

In another example embodiment, when wireless functions are turned off on the wireless device, such as manually turned off or when on an airplane, the switch function 1106 can switch to the touch sensor function.

Referring still to the switch function 1106, in example embodiments where there are two layers of conductive material, being the x row layer and the y column layer, one of the layers can be used to detect the touch event while the other layer has an antenna area that is being used as an antenna. In response to detecting the touch event in one layer at the same alignment as the antenna area of the other layer, the antenna function in the antenna area of the other layer is switched off, and the touch sensor function for that antenna area of the other layer is switched on, to provide better touch position accuracy. Any remaining antenna areas of the other layer can be activated, or remain activated if already activated, for antenna function in such a case.

Referring still to the switch function 1106, in example embodiments where there is more than one antenna area in the conductive material, the duty cycle for operating as the antenna may include sequential activation/operation of each antenna area. A touch position may be detected in one antenna area when off cycle, and the duty cycle may skip that one antenna area for a specified time period after touch events are no longer detected in that one antenna area.

In an example embodiment, the switch function 1106 is based on determining an amount of wireless traffic that is being transmitted or received. For example, if the amount of wireless traffic exceeds a threshold, the switch function 1106 can then activate operation of the antenna function for a relatively longer duration from a normal duty cycle, and activate the touch sensor function for a relatively shorter duration, and vice versa.

In an example embodiment, the switch function 1106 is based on determining a number or frequency of touch events being detected. For example, if the number or frequency of touch events exceeds a threshold (e.g. number of touch events per second or minute), for each duty cycle, the switch function 1106 can activate the touch sensor function for a relatively longer duration from a normal duty cycle and activate the antenna function for a relatively shorter duration, and vice versa.

In an example embodiment, the switch function 1106 is based on predetermined or specified criteria. In an example embodiment, the switch function 1106 is also used to maintain activation of the antenna function or the touch sensor function when the particular electromagnetically conductive element is already in that state. In an example embodiment, the switch function 1106 is used to turn on the antenna function or the touch sensor function from an off state of the wireless communication device 201, such as from a sleep state, a standby state, or a powered off state. In an example embodiment, the switch function 1106 is used to turn off both the antenna function and the touch sensor function.

Referring again to Figure 2, the example wireless communication device 201 will now be described in greater detail. The wireless communication device 201 can be configured for cellular or mobile communication, in an example embodiment. The wireless communication device 201 is a two-way communication device having at least data and possibly also voice communication capabilities, and the capability to communicate with other computer systems, for example, via Local Area Networks (LANs), wireless wide area networks (WWANs) and the Internet.

The wireless communication device 201 includes a case that can be rigid or flexible. The wireless communication device 201 includes a controller including at least one processor 240 (such as a microprocessor) that controls the overall operation of the wireless communication device 201. The processor 240 interacts with the communication subsystem 211 for exchanging radio frequency signals to perform communication functions. The display screen 204 can be, for example, a light emitting diode (LED) screen or a liquid crystal display (LCD) screen. The processor 240 interacts with additional device subsystems including input devices 206 such as a keyboard and control buttons, memory 244, speaker 256, microphone 258, short-range communication subsystem 272, and other device subsystems. The communication subsystem 211 can also be configured for wired communication (not shown).

Signals wirelessly received by the antenna elements 218 are input to the receiver 214, which may perform such receiver functions as signal amplification, signal combining, frequency down conversion, filtering, channel selection, etc., as well as analog-to-digital (A/D) conversion, as would be understood in the art. A/D conversion of a received signal allows more complex communication functions such as demodulation and decoding to be performed in the DSP 227. In a similar manner, signals to be transmitted are processed, including modulation and encoding, for example, by the DSP 227. These DSP-processed signals are input to the transmitter 216 for digital-to-analog (D/A) conversion, frequency up conversion, filtering, amplification, and transmission via the antennas 220. The DSP 227 not only processes communication signals, but may also provide for receiver and transmitter control. For example, the gains applied to communication signals in the receiver 214 and the transmitter 216 may be adaptively controlled through automatic gain control algorithms implemented in the DSP 227.

The receiver 214, through control by the DSP 227, may be used to independently activate each antenna element 218a, 218b, ..., 218n. The transmitter 216, through control by the DSP 227, may be used to independently activate each antenna element 220a, 220b, ..., 220n. Reference to activating for example includes using an individual antenna element 218 to detect electromagnetic radiation, typically by way of activating associated switches or amplifiers, or similar components.

The short-range communication subsystem 272 is an additional optional component that provides for communication between the wireless communication device 201 and different systems or devices. For example, the short-range communication subsystem 272 may include a Bluetooth (TM) communication module to provide for communication with similarly-enabled systems and devices. The short-range communication subsystem 272 uses the communication subsystem 211 and the associated antenna elements 218, 220 in some example embodiments.

A number of applications that control basic device operations, including data and possibly voice communication applications, will normally be installed on the wireless communication device 201 during or after manufacture. Additional applications or upgrades to the operating system or software applications may also be loaded onto the wireless communication device 201. For data communication, a received data signal such as a text message, an email message, or Web page download will be processed by the communication subsystem 211 and input to the processor 240 for further processing. A user of the wireless communication device 201 may also compose data items, such as email messages, for example, using the input devices in conjunction with the display screen 204. These composed items may be transmitted through the communication subsystem 211 over the wireless network. The wireless communication device 201 can also provide telephony functions and operates as a typical mobile phone. Received signals are output to the speaker 256 and signals for transmission are generated by a transducer such as the microphone 258. The telephony functions are provided by a combination of software/firmware (e.g., a voice communication module) and hardware (e.g., the microphone 258, the speaker 256 and input devices).

In an example embodiment, the wireless communication device 201 is a personal basic service set (PBSS) control point (PCP), an access point (AP) or a station (STA) in a network compliant with one or more of the IEEE 802.11 standards, as understood in the art.

In an example embodiment, at least one of the modules of the wireless communication device 201 is implemented by an electronic component. The electronic components may be provided as a semiconductor circuit, for example forming part or all of an integrated circuit package. The electronic components may be provided as different semiconductor circuits, chip packagings, circuit boards or processors. The circuitry may be digital circuitry or analog circuitry. In other embodiments, the circuitry is reconfigurable and reprogrammable via a control interface or user interface.

Example embodiments of the wireless communication device 201 includes mobile phones, tablets, computers, vehicle dashboards, Global Positioning Systems (GPS), and Point-Of-Sale (POS) terminals.

Various example embodiments can be applied to signal transmission, signal receiving, and signal processing in millimeter wave (mmWave) wireless communication systems. Some example embodiments are applicable to signal transmission, signal receiving, and signal processing in Wi-Fi (TM) communication systems, as specified in the IEEE 802.11 series of standards. It will be readily appreciated that example embodiments may be applied to other wireless communication systems, as well as other communication environments.

Some example embodiments are applied for signal processing in single channel systems, multiple channel systems, beamforming, multiple channel systems, Multiple-Input-Multiple-Output (MIMO) systems, massive MIMO systems, multiple channel systems, or multicarrier systems. Some example embodiments may be used to operate in wireless systems, including 3G and 4G, and could be used with higher generation systems including 5G.

An example embodiment is a method of manufacture of any of the described touch sensor devices. The method includes etching a conductive material onto a transparent substrate, the conductive material having an electromagnetically conductive element. The transparent substrate is formed of insulating material (dielectric material) that insulates the layers of conductive material. The method includes providing, e.g., by etching, one or more conductive leads from the conductive material to the touch sensor controller 104 and to the antenna controller 106. This allows the electromagnetically conductive element of the conductive material to be used as both a touch sensor and an antenna. The method includes layering one or more transparent dielectric layers onto the conductive material, for operation as a capacitive touch sensor.

In the described example embodiments, reference to "layer" does not necessarily mean a flat plane. In some examples, "layer" can include multiple layers.

The example embodiments described above may be implemented by using hardware only or by using software and a necessary universal hardware platform. Based on such understandings, the technical solution of some example embodiments may be embodied in the form of a software product. The software product may be stored in a non-volatile or non-transitory storage medium, which can be a compact disk read-only memory (CD-ROM), USB flash disk, or a removable hard disk. The software product includes a number of instructions that enable a computer device (personal computer, server, or network device) to execute the methods provided in the example embodiments. The software product may additionally include a number of instructions that enable a computer device to execute operations for configuring or programming a digital logic apparatus in accordance with example embodiments.

Example apparatuses and methods described herein, in accordance with example embodiments, can be implemented by one or more controllers. The controllers can comprise hardware, software, or a combination of hardware and software, depending on the particular application, component or function. In some example embodiments, the one or more controllers can include analog or digital components, and can include one or more processors, one or more non-transitory storage mediums such as memory storing instructions executable by the one or more processors, one or more transceivers (or separate transmitters and receivers), one or more signal processors (at least one of analog and digital), and one or more analog circuit components.

In the described methods or block diagrams, the boxes may represent at least one of events, steps, functions, processes, modules, messages, and state-based operations, etc. Although some of the above examples have been described as occurring in a particular order, it will be appreciated by persons skilled in the art that some of the steps or processes may be performed in a different order provided that the result of the changed order of any given step will not prevent or impair the occurrence of subsequent steps. Furthermore, some of the messages or steps described above may be removed or combined in other embodiments, and some of the messages or steps described above may be separated into a number of sub-messages or sub-steps in other embodiments. Even further, some or all of the steps may be repeated, as necessary. Elements described as methods or steps similarly apply to systems or subcomponents, and vice-versa. Reference to such words as "sending" or "receiving" could be interchanged depending on the perspective of the particular device.

The above discussed embodiments are considered to be illustrative and not restrictive. Example embodiments described as methods would similarly apply to systems, and vice-versa.

## Claims

1. A touch sensor device, comprising:
a layer of conductive material that includes a plurality of electromagnetically conductive elements;
a touch sensor controller (104) configured to operate the plurality of electromagnetically conductive elements as a touch sensor; and
an antenna controller (106) configured to operate the plurality of electromagnetically conductive elements as an antenna;
**characterized in that** the plurality of electromagnetically conductive elements are separated by an insulating material to operate as a parasitic patch antenna by the antenna controller.

2. The touch sensor device as claimed in claim 1, further comprising one or more transparent dielectric layers (154, 306, 312) that cover the conductive material.

3. The touch sensor device as claimed in any one of claims 1 and 2, wherein the touch sensor controller (104) and the antenna controller (106) are further configured to operate the plurality of electromagnetically conductive elements as the touch sensor at a different time than operating the plurality of electromagnetically conductive elements as the antenna.

4. The touch sensor device as claimed in claim 3, further comprising a memory (244) that stores a whitelist of one or more applications, and wherein operation of the plurality of electromagnetically conductive elements is switched from operation as the antenna to operation as the touch sensor based on detecting execution of one of the applications in the whitelist.

5. The touch sensor device as claimed in any one of claims 1 to 4, wherein the conductive material is a conductive mesh (112), the touch sensor device further comprising a transparent substrate (156) for supporting the conductive mesh.

6. The touch sensor device as claimed in claim 5, further comprising one or more transparent dielectric layers (154, 306, 312) that cover the transparent substrate (156, 308, 314) and the conductive mesh (112).

7. The touch sensor device as claimed in claims 5 or 6, wherein the conductive mesh (112) is arranged in a plurality of rows, the touch sensor controller (104) configured to detect a change in capacitance of at least one of the rows.

8. The touch sensor device as claimed in claim 7, wherein the antenna controller (106) is configured to operate the conductive material from more than one row collectively as a single antenna.

9. The touch sensor device as claimed in claims 7 or 8, further comprising a second layer of conductive material insulated from said layer of conductive material, the second conductive material being arranged in a plurality of columns that are orthogonal to the plurality of rows, wherein the touch sensor controller is configured to operate the second conductive material as the touch sensor.

10. The touch sensor device as claimed in claim 9, wherein the touch sensor controller (104) is configured to detect a touch position of one of the rows and one of the columns using said layer of conductive material and said second layer of conductive material.

11. The touch sensor device as claimed in claim 9, wherein the touch sensor controller (104) is configured to: detect a touch position of one of the columns, determine that no touch event has been detected on any of the rows, and infer a touch position of the row or rows that are currently being used by the antenna controller as the antenna.

12. The touch sensor device as claimed in claim 9, wherein the second conductive material includes a second electromagnetically conductive element wherein the antenna controller (106) is configured to operate the second electromagnetically conductive element as the antenna and wherein the touch sensor controller (104) is configured to operate the second conductive material as the touch sensor.

13. The touch sensor device as claimed in any one of claims 5 to 12, further comprising a second layer of conductive material insulated from said layer of conductive material and including a second electromagnetically conductive element (158, 160), wherein the touch sensor controller (104) is configured to operate the second electromagnetically conductive element (158, 160) as the touch sensor, wherein the antenna controller (106) is configured to operate the second electromagnetically conductive element (158, 160) as the antenna.

14. A touch display, comprising:
a display screen;
a layer of conductive material that overlays the display screen and includes a plurality of electromagnetically conductive elements;
a touch sensor controller configured to operate the plurality of electromagnetically conductive elements as a touch sensor; and
an antenna controller configured to operate the plurality of electromagnetically conductive elements as an antenna;
**characterized in that** the plurality of electromagnetically conductive elements are separated by an insulating material to operate as a parasitic patch antenna by the antenna controller.

## Patentansprüche

1. Berührungssensorvorrichtung, Folgendes umfassend:
eine Schicht aus leitfähigem Material, die eine Vielzahl elektromagnetisch leitfähiger Elemente beinhaltet;
einen Berührungssensorcontroller (104), der dazu konfiguriert ist, die Vielzahl elektromagnetisch leitfähiger Elemente als Berührungssensor zu betreiben; und
einen Antennencontroller (106), der dazu konfiguriert ist, die Vielzahl elektromagnetisch leitfähiger Elemente als Antenne zu betreiben;
**dadurch gekennzeichnet, dass** die Vielzahl elektromagnetisch leitfähiger Elemente durch ein Isoliermaterial getrennt ist, um durch den Antennencontroller als parasitäre Patchantenne zu funktionieren.

2. Berührungssensorvorrichtung nach Anspruch 1, ferner umfassend eine oder mehrere transparente dielektrische Schichten (154, 306, 312), die das leitfähige Material bedecken.

3. Berührungssensorvorrichtung nach einem der Ansprüche 1 und 2, wobei der Berührungssensorcontroller (104) und der Antennencontroller (106) ferner dazu konfiguriert sind, die Vielzahl von elektromagnetisch leitfähigen Elementen zu einem anderen Zeitpunkt als den Berührungssensor zu betreiben als die Vielzahl von elektromagnetisch leitfähigen Elementen als die Antenne zu betreiben.

4. Berührungssensorvorrichtung nach Anspruch 3, ferner umfassend einen Speicher (244), der eine Whitelist einer oder mehrerer Anwendungen speichert, und wobei Betreiben der Vielzahl von elektromagnetisch leitfähigen Elementen basierend auf der Erkennung der Ausführung einer der Anwendungen in der Whitelist von dem Betrieb als Antenne auf den Betrieb als Berührungssensor umgeschaltet wird.

5. Berührungssensorvorrichtung nach einem der Ansprüche 1 bis 4, wobei das leitfähige Material ein leitfähiges Netz (112) ist, wobei die Berührungssensorvorrichtung ferner ein transparentes Substrat (156) zum Tragen des leitfähigen Netzes umfasst.

6. Berührungssensorvorrichtung nach Anspruch 5, ferner umfassend eine oder mehrere transparente dielektrische Schichten (154, 306, 312), die das transparente Substrat (156, 308, 314) und das leitfähige Netz (112) bedecken.

7. Berührungssensorvorrichtung nach Anspruch 5 oder 6, wobei das leitfähige Netz (112) in einer Vielzahl von Reihen angeordnet ist und der Berührungssensorcontroller (104) dazu konfiguriert ist, eine Änderung der Kapazität von mindestens einer der Reihen zu erkennen.

8. Berührungssensorvorrichtung nach Anspruch 7, wobei der Antennencontroller (106) dazu konfiguriert ist, das leitfähige Material aus mehr als einer Reihe gemeinsam als eine einzige Antenne zu betreiben.

9. Berührungssensorvorrichtung nach Anspruch 7 oder 8, ferner umfassend eine zweite Schicht aus leitfähigem Material, die von der Schicht aus leitfähigem Material isoliert ist, wobei das zweite leitfähige Material in einer Vielzahl von Spalten angeordnet ist, die orthogonal zu der Vielzahl von Zeilen ist, wobei der Berührungssensorcontroller dazu konfiguriert ist, das zweite leitfähige Material als Berührungssensor zu betreiben.

10. Berührungssensorvorrichtung nach Anspruch 9, wobei der Berührungssensorcontroller (104) dazu konfiguriert ist, eine Berührungsposition einer der Zeilen und einer der Spalten unter Verwendung der Schicht aus leitfähigem Material und der zweiten Schicht aus leitfähigem Material zu erkennen.

11. Berührungssensorvorrichtung nach Anspruch 9, wobei der Berührungssensorcontroller (104) konfiguriert ist zum: Erkennen einer Berührungsposition einer der Spalten, Feststellen, dass auf keiner der Zeilen ein Berührungsereignis erkannt wurde, und Ableiten einer Berührungsposition der Zeile oder Zeilen, die aktuell von dem Antennencontroller als Antenne verwendet werden.

12. Berührungssensorvorrichtung nach Anspruch 9, wobei das zweite leitfähige Material ein zweites elektromagnetisch leitfähiges Element umfasst, wobei der Antennencontroller (106) dazu konfiguriert ist, das zweite elektromagnetisch leitfähige Element als Antenne zu betreiben, und wobei der Berührungssensorcontroller (104) dazu konfiguriert ist, das zweite leitfähige Material als Berührungssensor zu betreiben.

13. Berührungssensorvorrichtung nach einem der Ansprüche 5 bis 12, ferner umfassend eine zweite Schicht aus leitfähigem Material, die von der Schicht aus leitfähigem Material isoliert ist und ein zweites elektromagnetisch leitfähiges Element (158, 160) enthält, wobei der Berührungssensorcontroller (104) dazu konfiguriert ist, das zweite elektromagnetisch leitfähige Element (158, 160) als Berührungssensor zu betreiben, wobei der Antennencontroller (106) dazu konfiguriert ist, das zweite elektromagnetisch leitfähige Element (158, 160) als Antenne zu betreiben.

14. Berührungsanzeige, umfassend:
einen Anzeigebildschirm;
eine Schicht aus leitfähigem Material, die eine Vielzahl von elektromagnetisch leitfähigen Elementen umfasst;
einen Berührungssensorcontroller, der dazu konfiguriert ist, die Vielzahl von elektromagnetisch leitfähigen Elementen als Berührungssensor zu betreiben; und
einen Antennencontroller, der dazu konfiguriert ist, die Vielzahl von elektromagnetisch leitfähigen Elementen als Antenne zu betreiben;
**dadurch gekennzeichnet, dass** die Vielzahl elektromagnetisch leitfähiger Elemente durch ein Isoliermaterial getrennt ist, um durch den Antennencontroller als parasitäre Patchantenne zu funktionieren.

## Revendications

1. Dispositif à capteur tactile, comprenant :
une couche de matériau conducteur qui comporte une pluralité d'éléments électromagnétiquement conducteurs ;
un dispositif de commande de capteur tactile (104) configuré pour faire fonctionner la pluralité d'éléments électromagnétiquement conducteurs comme un capteur tactile ; et
un dispositif de commande d'antenne (106) configuré pour faire fonctionner la pluralité d'éléments électromagnétiquement conducteurs comme une antenne ;
**caractérisé en ce que** la pluralité d'éléments électromagnétiquement conducteurs est séparée par un matériau isolant pour fonctionner en tant qu'antenne planaire passive par le dispositif de commande d'antenne.

2. Dispositif à capteur tactile selon la revendication 1, comprenant également une ou plusieurs couches diélectriques transparentes (154, 306, 312) qui recouvrent le matériau conducteur.

3. Dispositif à capteur tactile selon l'une quelconque des revendications 1 et 2, dans lequel le dispositif de commande de capteur tactile (104) et le dispositif de commande d'antenne (106) sont également configurés pour faire fonctionner la pluralité d'éléments électromagnétiquement conducteurs comme capteur tactile à un moment différent de celui où la pluralité d'éléments électromagnétiquement conducteurs fonctionne comme antenne.

4. Dispositif à capteur tactile selon la revendication 3, comprenant également une mémoire (244) qui stocke une liste d'autorisation d'une ou plusieurs applications, et dans lequel le fonctionnement de la pluralité d'éléments électromagnétiquement conducteurs est commuté d'un fonctionnement comme antenne à un fonctionnement comme capteur tactile sur la base de la détection de l'exécution de l'une des applications de la liste d'autorisation.

5. Dispositif à capteur tactile selon l'une quelconque des revendications 1 à 4, dans lequel le matériau conducteur est un treillis conducteur (112), le dispositif à capteur tactile comprenant également un substrat transparent (156) pour supporter le treillis conducteur.

6. Dispositif à capteur tactile selon la revendication 5, comprenant également une ou plusieurs couches diélectriques transparentes (154, 306, 312) qui recouvrent le substrat transparent (156, 308, 314) et le treillis conducteur (112).

7. Dispositif à capteur tactile selon les revendications 5 ou 6, dans lequel le treillis conducteur (112) est agencé en une pluralité de rangées, le dispositif de commande de capteur tactile (104) étant configuré pour détecter un changement de capacité d'au moins l'une des rangées.

8. Dispositif à capteur tactile selon la revendication 7, dans lequel le dispositif de commande d'antenne (106) est configuré pour faire fonctionner le matériau conducteur de plus d'une rangée collectivement comme une antenne unique.

9. Dispositif à capteur tactile selon les revendications 7 ou 8, comprenant également une seconde couche de matériau conducteur isolée de ladite couche de matériau conducteur, le second matériau conducteur étant agencé en une pluralité de colonnes orthogonales à la pluralité de rangées, dans lequel le dispositif de commande de capteur tactile est configuré pour faire fonctionner le second matériau conducteur comme capteur tactile.

10. Dispositif à capteur tactile selon la revendication 9, dans lequel le dispositif de commande de capteur tactile (104) est configuré pour détecter une position tactile de l'une des rangées et de l'une des colonnes en utilisant ladite couche de matériau conducteur et ladite seconde couche de matériau conducteur.

11. Dispositif à capteur tactile selon la revendication 9, dans lequel le dispositif de commande de capteur tactile (104) est configuré pour : détecter une position tactile de l'une des colonnes, déterminer qu'aucun événement tactile n'a été détecté sur aucune des rangées, et déduire une position tactile des une ou plusieurs rangées actuellement utilisées par le dispositif de commande d'antenne comme antenne.

12. Dispositif à capteur tactile selon la revendication 9, dans lequel le second matériau conducteur comporte un second élément électromagnétiquement conducteur dans lequel le dispositif de commande d'antenne (106) est configuré pour faire fonctionner le second élément électromagnétiquement conducteur comme antenne et dans lequel le dispositif de commande de capteur tactile (104) est configuré pour faire fonctionner le second matériau conducteur comme capteur tactile.

13. Dispositif à capteur tactile selon l'une quelconque des revendications 5 à 12, comprenant également une seconde couche de matériau conducteur isolée de ladite couche de matériau conducteur et comportant un second élément électromagnétiquement conducteur (158, 160), dans lequel le dispositif de commande de capteur tactile (104) est configuré pour faire fonctionner le second élément électromagnétiquement conducteur (158, 160) comme capteur tactile, dans lequel le dispositif de commande d'antenne (106) est configuré pour faire fonctionner le second élément électromagnétiquement conducteur (158, 160) comme antenne.

14. Dispositif d'affichage tactile, comprenant :
un écran d'affichage ;
une couche de matériau conducteur qui recouvre l'écran d'affichage et comporte une pluralité d'éléments électromagnétiquement conducteurs ;
un dispositif de commande de capteur tactile configuré pour faire fonctionner la pluralité d'éléments électromagnétiquement conducteurs comme un capteur tactile ; et
un dispositif de commande d'antenne configuré pour faire fonctionner la pluralité d'éléments électromagnétiquement conducteurs comme une antenne ;
**caractérisé en ce que** la pluralité d'éléments électromagnétiquement conducteurs est séparée par un matériau isolant pour fonctionner comme une antenne planaire passive par le dispositif de commande d'antenne.
